Europäisches Patentamt

European Patent Office

Office européen des brevets

(19)

(11) Veröffentlichungsnummer: **0 330 028**

**A1**

## (12) EUROPÄISCHE PATENTANMELDUNG

(21) Anmeldenummer: **89102384.8**

(22) Anmeldetag: **11.02.89**

(51) Int. Cl.4: **C02F 1/78 , C02F 1/58 , C02F 1/62**

(30) Priorität: **25.02.88 DE 3805906**
**25.02.88 DE 3805908**

(43) Veröffentlichungstag der Anmeldung:
**30.08.89 Patentblatt 89/35**

(84) Benannte Vertragsstaaten:
**AT BE CH DE FR LI NL**

(71) Anmelder: **Linde Aktiengesellschaft**
**Abraham-Lincoln-Strasse 21**
**D-6200 Wiesbaden(DE)**

(72) Erfinder: **Matt, Konrad, Dr.rer.nat.**
**Leonrodstrasse 12**
**D-8000 München 19(DE)**
Erfinder: **Guttenberger, Hans-Georg,**
**Dr.rer.nat.**
**Nelkenweg 26**
**D-8192 Geretsried(DE)**

(74) Vertreter: **Schaefer, Gerhard, Dr.**
**Linde Aktiengesellschaft Zentrale**
**Patentabteilung**
**D-8023 Höllriegelskreuth(DE)**

(54) **Verfahren und Vorrichtung zur Entgiftung von cyanid- und schwermetallhaltigen Lösungen.**

(57) Die Erfindung betrifft ein Verfahren und eine Vorrichtung zur Entgiftung von cyanid- und schwermetallhaltigen Lösungen. Zur Entfernung sowohl von freien Cyanid- und Schwermetallionen als auch von Cyan-Schwermetall-Komplexen wird erfindungsgemäß vorgeschlagen, ein ozonhaltiges Gas in der Lösung zu lösen, anschließend $CO_2$ in die Lösung einzuspeisen und entstehende Fällprodukte abzuziehen.

EP 0 330 028 A1

## Verfahren und Vorrichtung zur Entgiftung von cyanid- und schwermetalhaltigen Lösungen

Die Erfindung betrifft ein Verfahren zur Entgiftung von cyanid- und schwermetallhaltigen Lösungen sowie eine Vorrichtung zur Durchführung des Verfahrens.

Cyanid- und schwermetallhaltige Lösungen wie z.B. Galvanikabwässer können aufgrund ihrer erheblichen Giftigkeit nicht ohne weiteres an natürliche Gewässer oder biologische Kläranlagen abgegeben werden.

Üblicherweise werden in den Lösungen enthaltene Cyanidionen und Cyanokomplexe durch Zugabe von Chlorbleichlauge entfernt. Dabei werden Cyanokomplexe zerstört und das Cyanid zunächst zu Chlorcyan oxidiert, das sich dann zu Cyanat umsetzt. Während das Endprodukt Cyanat eine gegenüber Cyanid deutlich geringere Giftigkeit aufweist, handelt es sich beim Zwischenprodukt Chlorcyan um einen leicht flüchtigen und sehr giftigen Stoff. Außerdem reagiert das Chlorcyan mit organischen Inhaltsstoffen auch zu den im Abwasser höchst unerwünschten Chlorkohlenwasserstoffen. Diese sind biologisch extrem schwer abbaubar und behindern sogar bakterielle Abbauprozesse von sonst gut abbaubaren Wasserinhaltsstoffen.

Andererseits stellen auch Schwermetalle in Lösungen, die an natürliche Gewässer oder biologische Kläranlagen abgegeben werden sollen, ein erhebliches Problem dar. Schwermetalle reichern sich im Klärschlamm an und verhindern oder erschweren eine wirtschaftliche Schlammentsorgung, wie Naßverbringung, Ausfaulung etc. Üblicherweise werden die Schwermetalle durch Zugabe geeigneter Fällungsmittel, wie z.B. Natronlauge oder Kalk, als Hydroxide ausgefällt.

Insbesondere bei Abwässern der Galvanik- und Metallverarbeitungsindustrie liegen die Schwermetalle aber als Cyanidkomplexe vor. In diesem Fall ist eine direkte Fällung der Schwermetalle nicht möglich.

Aufgabe der vorliegenden Erfindung ist es daher, ein Verfahren der eingangs genannten Art so auszugestalten, daß sowohl Cyanidinonen und Schwermetalle als auch Cyan-Schwermetall-Komplexe auf einfache und wirtschaftliche Weise weitgehend entfernt werden und giftige oder umweltgefährdende Reaktionsprodukte in möglichst geringer Menge entstehen.

Diese Aufgabe wird erfindungsgemäß dadurch gelöst, daß ein ozonhaltiges Gas in der Lösung gelöst wird, anschließend $CO_2$ in die Lösung eingespeist wird und entstehende Fällprodukte abgezogen werden.

Durch das ozonhaltige Gas werden die Cyanidionen bereits bei Raumtemperatur zu Cyanationen oxidiert. Cyanate weisen nur etwa 1/1000 der Giftigkeit von Cyaniden auf und können biologisch ohne große Schwierigkeiten abgebaut werden.

Im Gegensatz zur Oxidation mit Chlorbeichlauge findet beim Einsatz eines ozonhaltigen Gases keine Aufsalzung und auch keine Bildung störender oder toxischer Folgeprodukte statt.

Die dekomplexierten Schwermetallionen werden anschließend durch Einspeisung von $CO_2$ in die Lösung ausgefällt. Der dabei entstehende Carbonatschlamm wird abgezogen.

Durch die erfindungsgemäße Kombination der beiden Verfahrensmerkmale Ozonisierung und $CO_2$-Fällung wird eine einfache und wirtschaftliche Entgiftung cyanid- und schwermetallhaltiger Lösungen erreicht. Insbesondere werden durch das erfindungsgemäße Verfahren auch Schwermetall-Cyano-Komplexe wirkungsvoll entfernt.

Zweckmäßigerweise wird vor und/oder bei der Einspeisung von $CO_2$ ein pH-Wert von ca. 9 bis ca. 11 in der Lösung eingestellt. Dadurch wird die Ausfällung der Schwermetallionen erleichtert.

In einer bevorzugten Ausführungsform der Erfindung wird vor dem Lösen des ozonhaltigen Gases ein pH-Wert von ca. 11 in der Lösung eingestellt. Diese Maßnahme bewirkt ein hohes Oxidationspotential für die Oxidation der Cyanidionen durch das ozonhaltige Gas. Außerdem wird dadurch die nachfolgende Fällung erleichtert.

Bevorzugterweise werden vor dem Lösen des ozonhaltigen Gases in der Lösung nichtkomplexierte Schwermetalle ausgefällt. Die nichtkomplexierten Schwermetalle müssen ja nicht erst durch Ozonisierung der Cyankomplexe dekomplexiert werden.

Sie können daher bereits vor der Ozonisierung ausgefällt werden, wodurch die der Ozonisierung nachgeschaltete Fällung entlastet wird.

Als besonders zweckmäßig hat es sich dabei erwiesen, die nichtkomplexierten Schwermetalle ebenfalls durch Einspeisen von $CO_2$ auszufällen, da das $CO_2$ ohnehin für die nachfolgende Fällung der dekomplexierten Schwermetalle zur Verfügung steht. Dabei wird vorteilhafterweise ein pH-Wert von ca. 9 bis ca. 11 in der Lösung eingestellt. Alternativ oder zusätzlich kann auch vor der eigentlichen $CO_2$-Einspeisung der pH-Wert z.B. durch Zugabe von NaOH entsprechend eingestellt werden.

Wird das Ozon auch technisch reinem Sauerstoff z.B. durch stille elektrische Entladung oder UV-Bestrahlung hergestellt, so erhält man ein Gasgemisch aus ca. 5 bis 10% Ozon und 90 bis 95% Sauerstoff. Dies hat den Vorteil, daß keine störenden Stickoxide entstehen und durch Wegfall des Inertgases Stickstoff mehr Sauerstoff in der Lösung gelöst werden kann.

Eine Vorrichtung zur Durchführung des Verfahrens ist gekennzeichnet durch mindestens einen Reaktor zum Lösen des ozonhaltigen Gases in der Lösung, der über mindestens eine Leitung mit mindestens einem Reaktor zur Einspeisung des $CO_2$ in die Lösung verbunden ist.

In einer bevorzugten Ausführungsform ist der Reaktor zur Lösen des ozonhaltigen Gases in der Lösung als ein Rohr ausgebildet, in das konzentrisch ein Zylinder aus gasdurchlässigem Material eingesetzt ist. Zwischen der Zylinderaußenwand und der Rohrinnenwand ist ein Zwischenraum vorgesehen. Der Innenraum des Zylinders steht ferner mit einer Gaszufuhrleitung für das ozonhaltige Gas in Verbindung, während der Zwischenraum mit einer Zufuhrleitung für die Lösung verbunden ist. Die Zufuhrleitung für die zu behandelnde Lösung mündet tangential in das Rohr. Die Lösung tritt also tangential in das Rohr ein und erhält somit einen Drall um die Reaktorachse. Sedimentierbare Partikel werden so durch die Zentrifugalkraft von dem Zylinder fern gehalten, so daß Verstopfungen des gasdurchlässigen Zylindermaterials vermieden werden. Gleichzeitig ergibt sich dadurch eine gesteigerte Turbulenz in der Lösung, die den Stoffübergang Gas-Flüssig fördert.

Vorzugsweise besteht der Zylinder aus Sinter-Keramik. Das Rohr ist zweckmäßigerweise wegen der hohen Korrosivität von in Wasser gelöstem Ozon aus Edelstahl, PTFE oder PVC gefertigt.

In einer besonders zweckmäßigen Ausführungsform ist die Gaszufuhrleitung und die Zufuhrleitung für die Lösung an einem Ende des Rohres angebracht, während die Ableitung der Lösung zum $CO_2$-Reaktor am anderen Ende des Rohres angeordnet ist. Dadurch ist für eine möglichst lange Reaktionsstrecke und einen intensiven Stoffaustausch zwischen Gas und Lösung gesorgt.

In einer Weiterbildung des Erfindungsgedankens sind im Zwischenraum zwischen dem Zylinder und dem Rohr schräggestellte Leitschaufeln vorgesehen. Diese tragen einerseits den Zylinder und sorgen andererseits für eine Aufrechterhaltung des Dralls der Lösung der sich ja durch Reibung abschwächt.

Die Erfindung eignet sich zur Entgiftung aller denkbaren cyanid- und schwermetallhaltigen Lösungen. Insbesondere ist sie für eine Vorbehandlung von Abwässern aus der Galvanik-, Metallverarbeitungs- und Kokereiindustrie interessant. Die so vorbehandelten Abwässer können unbedenklich an biologische Abwassereinrigungsanlagen abgegeben werden. Die mit der Erfindung verbundene Sauerstoffbeladung des vorbehandelten Abwassers wirkt sich sogar positiv auf die nachfolgende biologische Reinigung aus.

Im folgenden sei die Erfindung anhand eines in Figuren schematisch dargestellten Ausführungsbeispiels näher erläutert.

Figur 1 zeigt ein Fließschema des erfindungsgemäßen Verfahrens,

Figur 2 zeigt den erfindungsgemäßen Reaktor zum Lösen des ozonhaltigen Gases in der Lösung;

Figur 3 zeigt einen Schnitt durch den Reaktor gemäß Figur 2 im bereich des Lösungszulauf,

Figur 4 zeigt einen Schnitt durch den Reaktor gemäß Figur 2 im Bereich der Leitschaufeln.

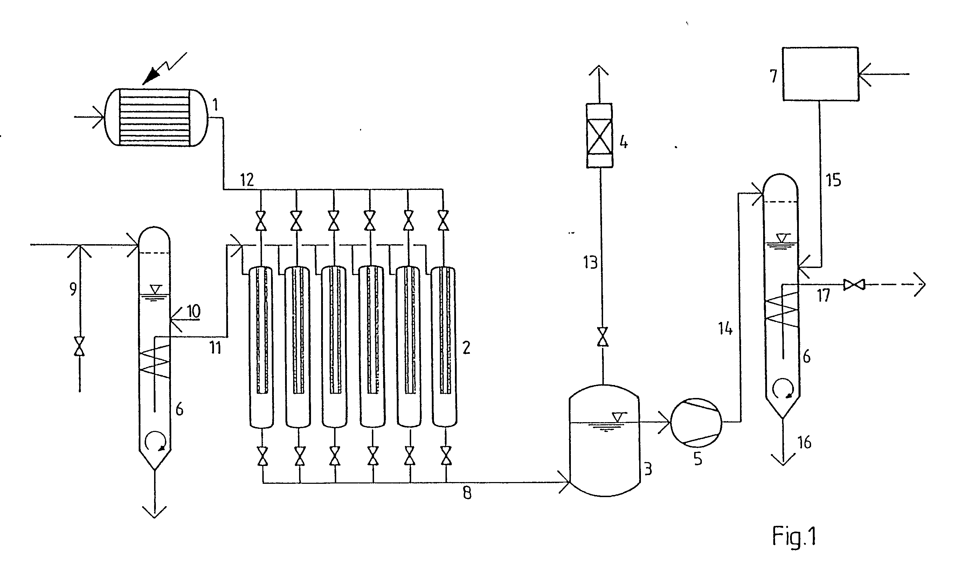

In Figur 1 sind die einzelnen Verfahrensschritte der Erfindung schematisch dargestellt. Die cyanid- und schwermetallhaltige Lösung wird zunächst durch Zugabe von NaOH über Leitung 9 auf einen pH-Wert von ca. 11 eingestellt. Anschließend werden in dem Reaktor 6 durch Einspeisen von $CO_2$ über Leitung 10 die nichtkomplexierten Schwermetalle ausgefällt.

Grundsätzlich kann als Reaktor 6 ein herkömmlicher Reaktor für Gas-Flüssig-Reaktionen verwendet werden. Die Abscheidung des entstehenden Carbonatschlamms erfolgt dann im Anschluß an die $CO_2$-Fällung. Im hier dargestellten Ausführungsbeispiel wird aber der in der gleichzeitig mit der vorliegenden Anmeldung eingereichten Patentanmeldung "Reaktor für Gas-Flüssig-Reaktionen" (internes Aktenzeichen G 88/09) beschriebene Reaktor verwendet. Dieser eignet sich ganz besonders für das erfindungsgemäße Verfahren, da hiermit keinerlei Verschlammungs- und Verstopfungsprobleme auftreten. Fällung und Abtrennung der gefällten Produkte erfolgen hierbei in einem Gerät.

Die von den nichtkomplexierten Schwermetallen befreite Lösung wird dann über Leitung 11 zu den Reaktoren 2 zum Lösen des ozonhaltigen Gases geführt. Das ozonhaltige Gas wird in einem Ozongenerator 1 aus technisch reinem Sauerstoff durch stille elektrische Entladung erzeugt. Man erhält so ein Gasgemisch aus ca. 8% Ozon und ca. 92% Sauerstoff. Dieses Gasgemisch wird über Leitung 12 den Reaktoren 2 zugeführt, wo es über Keramiksinter-Kerzen in die Lösung eingetragen wird. Die in der Lösung enthaltenen Cyan-Schwermetallkomplexe werden aufgespalten und die Cyanidionen zu den ungiftigere Cyanationen oxidiert.

Die so behandelte Lösung wird anschließend einem Ausgleichsbehälter 3 zugeführt, wo überschüssiges Ozon über Leitung 13 und einen Ozonvernichter 4 an die Atmosphäre austreten kann. Über Pumpe 5 und Leitung 14 wird die Lösung einem zweiten $CO_2$-Reaktor 6 zugeleitet. $CO_2$ wird über eine Meß und Steuerstrecke 7 une Leitung 15 in den Reaktor 6 eingeleitet und in die Lösung eingespeist. Die in den Ozon-Reaktoren 2 dekomplexierten Schwermetallionen werden ausgefällt und aus dem Reaktor 6 über Leitung 16 abgezogen. Im Ablauf von Reaktor 6 wird zur Erleichterung der Fällreaktion de pH-Wert über die in den Reaktor 6 eingespeiste $CO_2$-Menge so reguliert, daß sich in der Lösung ein pH-Wert von ca. 9 - 10 einstellt. Die entgiftete Flüssigkeit verläßt schließlich den Reaktor 6 über Leitung 17 und kann einer biologischen Behandlungsstufe zugeführt werden.

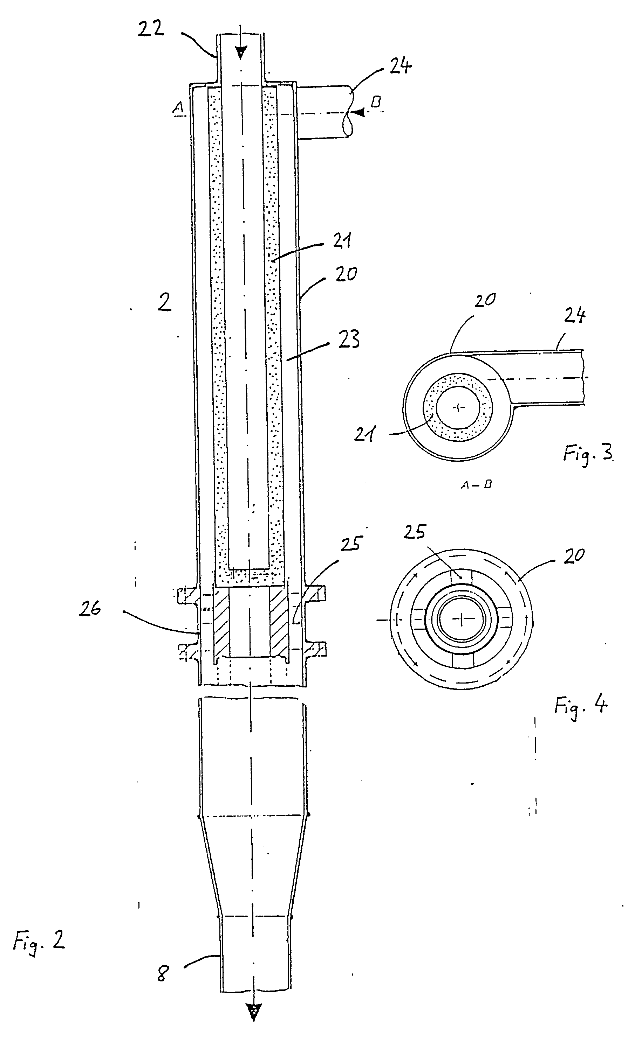

In Figur 2 ist ein Querschnitt durch den Ozon-Reaktor 2 dargestellt. In dem Edelstahlrohr 20, das einen Durchmesser von 100 mm aufweist, ist konzentrisch der Zylinder 21 eingesetzt. Als Zylinder 21 wird eine handelsübliche Keramik-Belüfterkerze mit einem Durchmesser von 70 mm und einer Länge von 500 mm verwendet. Die Lösung tritt über die Zufuhrleitung 24 tangential in den Zwischenraum 23 zwischen dem Edelstahlrohr 20 und der Keramik-Belüfterkerze 21 ein. Die Lösung erhält so einen Drall um die Reaktorachse, so daß sedimentierbare Partikel von der Keramik-Belüfterkerze ferngehalten werden. Das vom Ozongenerator kommende Ozon/Sauerstoff-Gemisch wird über die Gaszufuhrleitung 22 in den Innenraum der Keramik-Belüfterkerze 21 eingeleitet und tritt durch diese hindurch in den Zwischenraum 23 über. Im Zwischenraum 23 erfolgt die Oxidation der in der Lösung enthaltenen Cyanidionen und die Aufspaltung der Cyan-Schwermetall-Komplexe.

In einem unteren Teil des Reaktors 2 ist eine Wirbelkammer 26 mit schräggestellten Leitschaufeln 25 angeordnet. Diese bewirkt die Aufrechterhaltung des Dralls der Lösung.

Im Anschluß an die Wirbelkammer 26 können weitere Rohrabschnitte mit eingesetzten Keramik-Belüfterkerzen folgen. Das Rohr 20 geht schließlich an seinem unteren Ende in die Leitung 8 zur Ableitung der behandelten Lösung über.

Figur 3 zeigt einen Schnitt durch den Reaktor 2 im Bereich der Lösungszufuhrleitung 24. Die Zufuhrleitung 24, die einen Durchmesser von 50 mm aufweist, ist tangential an das Edelstrahlrohr 20 angeflanscht.

In Figur 4 ist schließlich ein Schnitt durch den Reaktor 2 im Bereich der Wirbelkammer 26 dargestellt. Die schräggestellten Leitschaufeln 25 tragen einerseits die Keramik-Belüfterkerze 21 und sorgen andererseits für die Aufrechterhaltung des Dralls der Lösung um die Reaktorachse.

**Ansprüche**

1. Verfahren zur Entgiftung von cyanid- und schwermetallhaltigen Lösungen, dadurch gekennzeichnet, daß ein ozonhaltiges Gas in der Lösung gelöst wird, anschließend $CO_2$ in die Lösung eingespeist wird und entstehende Fällprodukte abgezogen werden.

2. Verfahren nach Anspruch 1, dadurch gekennzeichnet, daß vor und/oder bei der Einspeisung von $CO_2$ ein pH-Wert von ca. 9 bis ca. 11 in der Lösung eingestellt wird.

3 Verfahren nach Anspruch 1 oder 2, dadurch gekennzeichnet, daß vor dem Lösen des ozonhaltigen Gases ein pH-Wert von ca. 11 in der Lösung eingestellt wird.

4. Verfahren nach einem der Ansprüche 1 bis 3, dadurch gekennzeichnet, daß vor dem Lösen des ozonhaltigen Gases nichtkomplexierte Schwermetalle ausgefällte werden.

5. Verfahren nach Anspruch 4, dadurch gekennzeichnet, daß die nichtkomplexierten Schwermetalle durch Einspeisen von $CO_2$ ausgefällt werden.

6. Verfahren nach Anspruch 4 oder 5, dadurch gekennzeichnet, daß vor und/oder bei der Ausfällung der nichtkomplexierten Schwermetalle ein pH-Wert von ca. 9 bis 11 in der Lösung eingestellt wird.

7. Verfahren nach einem der Ansprüche 1 bis 6, dadurch gekennzeichnet, daß das ozonhaltige Gas aus technisch reinem Sauerstoff gewonnen wird.

8. Verfahren nach einem der Ansprüche 1 bis 7, dadurch gekennzeichnet, daß das ozonhaltige Gas aus ca. 5 bis 10% Ozon und ca. 90 bis 95% Sauerstoff besteht.

9. Vorrichtung zur Durchführung des Verfahrens nach Anspruch 1, dadurch gekennzeichnet, daß mindestens ein Reaktor (2) zum Lösen des ozonhaltigen Gases in der Lösung über mindestens eine Leitung (8) mit mindestens einem Reaktor (6) zur Einspeisung des $CO_2$ in die Lösung verbunden ist.

10. Vorrichtung nach Anspruch 9, dadurch gekennzeichnet, daß

a) der Reaktor (2) zum Lösen des ozonhaltigen Gases in der Lösung als ein Rohr (20) ausgebildet ist, in das konzentrisch ein Zylinder (21) aus gasdurchlässigem Material eingesetzt ist,

b) zwischen dem Zylinder (21) und dem Rohr (20) ein Zwischenraum (23) vorgesehen ist,

c) der Innenraum des Zylinders (21) mit einer Gaszufuhrleitung (22) für das ozonhaltige Gas in Verbindung steht,

d) der Zwischenraum (23) mit einer Zufuhrleitung (24) für die Lösung verbunden ist und

e) die Zufuhrleitung (24) tangential in das Rohr (20) mündet.

11. Vorrichtung nach Anspruch 10, dadurch gekennzeichnet, daß das Rohr (20) aus Edelstahl besteht.

12. Vorrichtung nach Anspruch 10, dadurch gekennzeichnet, daß das Rohr (20) aus PVC besteht.

13 Vorrichtung nach Anspruch 10, dadurch gekennzeichnet, daß das Rohr (20) aus PTFE oder PTFE-Verbundwerkstoffen besteht.

14. Vorrichtung nach einem der Ansprüche 10 bis 13, dadurch gekennzeichnet, daß der Zylinder (21) aus Sinter-Keramik besteht.

15. Vorrichtung nach einem der Ansprüche 10 bis 14, dadurch gekennzeichnet, daß die Gaszufuhrleitung (22) und die Zufuhrleitung (24) für die Lösung an einem Ende des Rohres (20) angebracht ist und die Leitung (8) zur Ableitung der Lösung zum Reaktor (6) am anderen Ende des Rohres (20) angeordnet ist.

16. Vorrichtung nach einem der Ansprüche 10 bis 15, dadurch gekennzeichnet, daß im Zwischenraum (23) schräg gestellte Leitschaufeln (25) angeordnet sind.

G 249

Fig.1

G 249

Fig. 2

Fig. 3

A — B

Fig. 4

Europäisches Patentamt

**EUROPÄISCHER RECHERCHENBERICHT**

Nummer der Anmeldung

EP 89 10 2384

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE-A-3 527 589 (J. PRASSE) * Spalte 1, Ansprüche 1,5,7; Spalte 2, Zeilen 8-41; Spalte 2, Zeile 68 - Spalte 3, Zeile 32 * --- | 1,9,10 | C 02 F 1/78 C 02 F 1/58 C 02 F 1/62 |
| Y | US-A-3 736 254 (OWENS-ILLINOIS) * Spalte 4, Ansprüche 1,2 * --- | 1,2 | |
| A | CHEMICAL ABSTRACTS, Band 86, Nr. 14, 4. April 1977, Seite 381, Zusammenfassung Nr. 95450j, Columbus, Ohio, US; K. KOLODKO et al.: "Ozone detoxication of cyanide electroplating effluents. IV. Technological principles of the method", & POWLOKI OCHR. 1976, 4(3), 33-8 --- | 1-3 | |
| A | CHEMICAL ABSTRACTS, Band 81, Nr. 26, 30. Dezember 1974, Seite 416, Zusammenfassung Nr. 175905y, Columbus, Ohio, US; E. ALBRECHT: "Use of pure oxygen for water treatment", & DECHEMA-MONOGR. 1974, 75(1452-1485), 343-56 --- | 7,8 | RECHERCHIERTE SACHGEBIETE (Int. Cl.4) C 02 F |
| A | US-A-3 775 314 (S.W. BEITZEL et al.) * Spalte 2, Zeilen 23-28; Spalte 4, Zeile 62 - Spalte 5, Zeile 48 * --- | 1,10 | |
| A | US-A-2 984 463 (A. TORRICELLI) * Spalte 3, Zeilen 33-56; Spalte 5, Zeilen 47-61 * --- | 1,10,14 | |
| A | EP-A-0 125 162 (SOCIETE LYONNAISE DES EAUX ET DE L'ECLAIRAGE) * Seite 7, Ansprüche 1,2,9,10; Seite 3, Zeile 28 - Seite 4, Zeile 2; Figuren * ----- | 1,10,16 | |

Der vorliegende Recherchenbericht wurde für alle Patentansprüche erstellt

| Recherchenort | Abschlußdatum der Recherche | Prüfer |
|---|---|---|
| DEN HAAG | 23-05-1989 | TEPLY J. |